# EUROPEAN PATENT APPLICATION

(11) **EP 1 103 909 A2**
(43) Date of publication of application: **30.05.2001**
(21) Application number: 00309941.3
(22) Date of filing: 09.11.2000
(51) Int. Cl.: G06F 17/60, G06F 17/21

(54) **Enterprise job management system**

(30) Priority: 23.11.1999 US 447910
(71) Applicant: Hewlett-Packard Company, A Delaware Corporation, Palo Alto, CA 94304 (US)
(72) Inventor: Tallian, Andrew Eric, Portland, OR 97201 (US); Robson, Christopher J., Camas, WA 98607 (US); Mitchell, Kathryn L., Corvallis, OR 97330 (US); Laing, Scott Richard, Portland, OR 97210 (US); Kerr, John M., Albany, OR 97321 (US); Jones, Michael J., Corvallis, OR 97330 (US); Cripe, Brian E., Corvallis, OR 97330 (US); Orton, Kristann L., Lake Oswego, OR 97034-3932 (US); Lowblad, Mary Ann, Portland, OR 97229 (US)
(74) Representative: Colgan, Stephen James

(57) **Abstract**

An enterprise job management system (100) stores job requests, preferably originating from an enterprise control center (200, 300, 400), having a first set of attributes. Each job request is transmitted to an enterprise local site with a subset of the first set of attributes, as determined by the enterprise control center. Job choices selected by the local site among the subset of the first set of attributes are stored in the enterprise job management system. The enterprise job management system then instructs that the job request be fulfilled based on the first set of attributes and on the job choices selected by the local site. In this manner, enterprise control centers are able to maintain a high degree of control over their local sites, yet give flexibility to local sites to easily and efficiently personalize or localize job requests.

## Description

### Field of the Invention

This invention relates to the job management field. More particularly, this invention is an enterprise job management system for managing job requests from one or more enterprise control centers.

### Background of the Invention

Not long ago, travelers to cities in the United States and throughout the world would be greeted with the rich, unique culture that each city had to offer. More recently, however, cities in the United States and throughout the world are becoming to look more alike. For example, travelers to Seattle, Washington used to be greeted to a unique sight -- the Starbucks ® Coffee House. Today, Starbucks has expanded much beyond the Seattle area to nearly every major American city, and to many international cities as well. Likewise, McDonald's ®, Burger King ®, Kinko's ®, Coldwell Banker ®, Wal-Mart ®, Home Depot ®, and other similar organizations can be found throughout much of the world. The net effect of the proliferation of these national (and frequently international) chains into hundreds of cities around the world is that these cities have lost much of their unique culture.

While it is certainly convenient to be able to walk to a neighborhood Starbucks instead of traveling to Seattle to enjoy a cup of fine coffee, a growing number of people and communities are expressing increasing levels of dissatisfaction and unhappiness with these large chains moving in, often displacing local, family-run businesses in the process. In fact, some communities are downright hostile to these chains, and have even adopted ordinances prohibiting these national and international chains from moving into their cities.

This backlash against these chains has placed them in a very difficult position. On one hand, the headquarters of a chain needs to closely monitor, control, and regulate their local sites (often franchisees) to insure that the integrity of their national brand is maintained. On the other hand, it is precisely because of this level of control that the local sites of these international chains look nearly identical, thereby resulting in the feeling amongst people and communities that these chains are contributing to the destruction of the unique culture of the cities in which they reside.

This problem is exasperated by the fact that the daily operation of the local sites of these chains is generally quite complex and involves a large number of tasks that need to be performed. For example, a fast food restaurant needs to insure that deliveries of food and supplies are done in a timely manner, that the appearance of its employees fits within its corporate image, and that its promotional advertising is done in an appropriate manner. Because the operation of these local sites is so complex, the headquarters of these chains have thus far been forced to exhibit a near-draconian level of control on their local offices to insure a consistent, quality product and/or service. However, as their level of control increases, so do the complaints that these organizations are sucking the color out of our once great cities.

Thus far, only a few meager attempts have been made to address this problem. For example, the McDonald's logo displayed by their local sites in Canada contains a red maple leaf under the golden arches. McDonald's outlets in Japan also offer a few Japanese dishes on their menu. This represents an attempt by McDonald's to infuse some local culture into their stores - and probably to diffuse a local perception that McDonald's is a U.S.-based company not worthy of Canadian or Japanese support. Unfortunately, attempts such as these are relatively crude and can even increase the backlash these international chains are experiencing, as savvy consumers feel they are being pandered to.

Other chains send advertising copy to their local stores, with instructions to personalize the advertising copy with the address of the store, specials in the store, etc. Unfortunately, the local sites of these chains typically lack the ability to handle these tasks, often resulting in a very confusing message to the consumer. For example, on the very date this patent application was initially prepared, an advertisement appeared in a local newspaper for a new national chain moving into town. This advertisement showed two women smiling, and pointing to a big box in the middle of the ad with the title "Grand Opening Specials" on it. Unfortunately, the local store never entered any text into this box, and it appeared as a blank box in the ad. In addition, there was a large amount of white space at the bottom of the ad into which the address of the store that was opening was apparently supposed to go. The reader was left to guess not only what the grand opening specials were, but also had to guess the address of the local site of the national chain that was moving into the area. In this case, the image of the national chain was harmed by the fact the local office was unable to accomplish the personalization of this ad.

### Summary of the Invention

An enterprise job management system stores job requests, preferably originating from an enterprise control center, having a first set of attributes. Each job request is transmitted to an enterprise local site with a subset of the first set of attributes, as determined by the enterprise control center. Job choices selected by the local site among the subset of the first set of attributes are stored in the enterprise job management system. The enterprise job management system then instructs that the job request be fulfilled based on the first set of attributes and on the job choices selected by the local site. In this manner, enterprise control centers are able to maintain a high degree of control over their local sites, yet give flexibility to local sites to easily and efficiently personalize or localize job requests.

### Description of the Drawings

Figure 1 shows a block diagram of how the enterprise job management system of the preferred embodiment of the invention communicates with a plurality of enterprise control centers, vendors, and enterprise local sites.

Figure 2 shows the enterprise job management system communicating with a fictitious enterprise control center, a plurality of fictitious vendors, and a plurality of fictitious enterprise local sites.

Figure 3 shows the enterprise job management system of Figs. 1 and 2 in more detail.

Figures 4 and 5 show an overall flowchart of the operation of the enterprise job management system in the preferred embodiment of the invention.

Figures 6-11 show how various requests received from enterprise control centers, vendors, and enterprise local sites are processed by the enterprise job management system in the preferred embodiment of the invention.

Figure 12 is a flowchart showing how payments for use of the enterprise job management system are processed in the preferred embodiment of the invention.

Figures 13 through 23 show exemplary screens used to communicate to users of the enterprise job management system in filling an exemplary job request from a fictitious enterprise control center.

### Detailed Description of the Preferred Embodiment

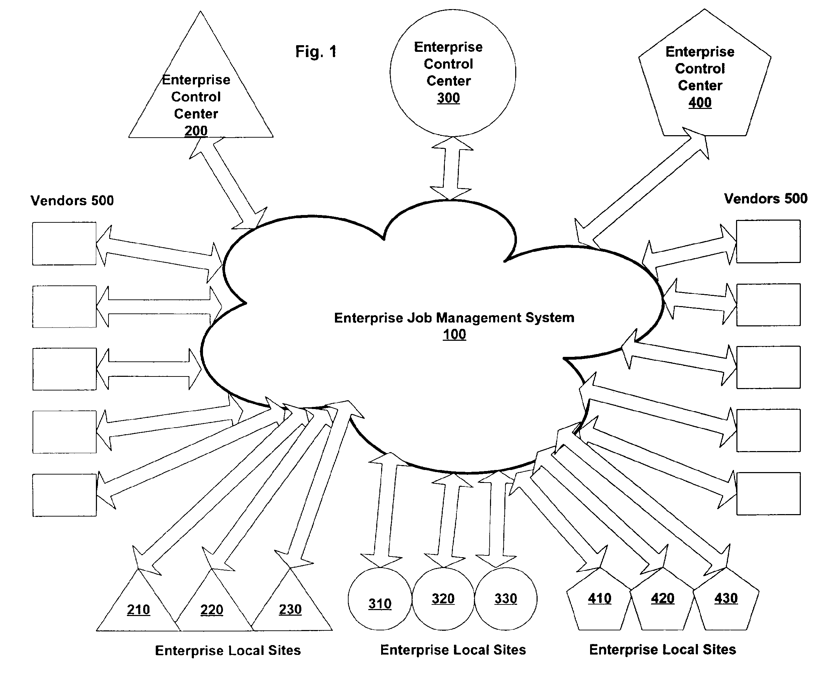

Figure 1 shows a block diagram of how the enterprise job management system of the preferred embodiment of the invention communicates with a plurality of enterprise control centers, vendors, and enterprise local sites. Enterprise job management system 100 is connected via a computer network, such as the Internet, to enterprise control center 200, enterprise control center 300, and enterprise control center 400. While three enterprise control centers are shown in Fig. 1, those skilled in the art will appreciate that the actual number of enterprise control centers can vary from one to dozens, hundreds, or even thousands. For the purposes of this invention, the term "enterprise control center" shall mean any decision making function of a corporation, partnership, sole proprietorship, or other type of legal business entity that provides goods and/or services to consumers. For example, the enterprise control center of an international chain such as Starbucks would typically be at the corporate headquarters of the company. Likewise, the enterprise control center of a single store with one owner and no employees would most probably be at that single store.

Enterprise job management system 100 is also connected via the computer network to a plurality of vendors, shown collectively as vendors 500. Again, while ten vendors are shown in Fig. 1, those skilled in the art will appreciate that anywhere from one vendor to thousands of vendors can be communicating with enterprise job management system 100 via the computer network and still fall within the spirit and scope of the preferred embodiment of the invention. For the purposes of this invention, the term "vendor" shall mean any organization that provides goods and/or services to another vendor, an enterprise control center and/or enterprise local site. For example, a vendor can provide cleaning services, employment services, graphics design services, printing services, food or inventory delivery, or the food or inventory itself to an enterprise control center and/or to an enterprise local site, just to name a few.

Enterprise job management system 100 is also connected via the computer network to enterprise local sites 210, 220, and 230 (associated with enterprise control center 200), enterprise local sites 310, 320 and 330 (associated with enterprise control center 300), and enterprise local sites 410, 420, and 430 (associated with enterprise control center 400). Again, those skilled in the art will appreciate that the actual number of enterprise local sites connected to enterprise job management system 100 via the computer network can vary from one to hundreds or thousands and still fall within the spirit and scope of the preferred embodiment of the invention.

A first alternate embodiment has been contemplated where there are no vendors 500 connected to enterprise job management system 100. In this embodiment, enterprise job management system 100 provides a mechanism for enterprise control centers to control their associated enterprise local sites, yet provide a mechanism for the local sites to appropriately customize materials sent to it by the enterprise control center via the enterprise job management system 100, in a manner that will be described in more detail later. In addition, another alternate embodiment has been contemplated where a plurality of vendors 500 are connected to enterprise job management system 100, but where there are no enterprise local sites connected to enterprise job management system 100. In this embodiment, enterprise job management system 100 provides a mechanism for enterprise control centers 200, 300, and 400 to select a vendor 500 to perform a job request based on a set of attributes provided to the enterprise job management system, in a manner that will be described in more detail later.

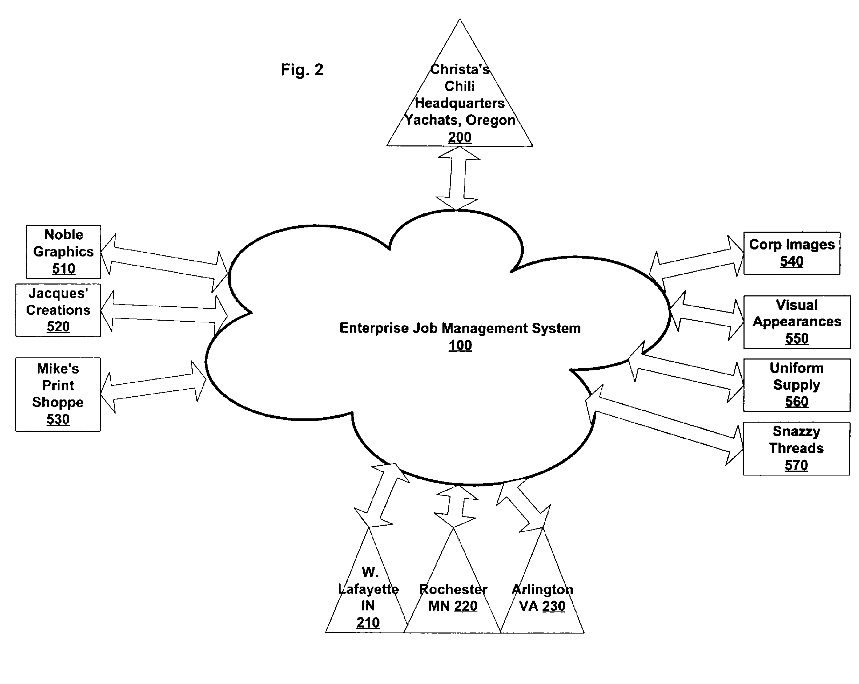

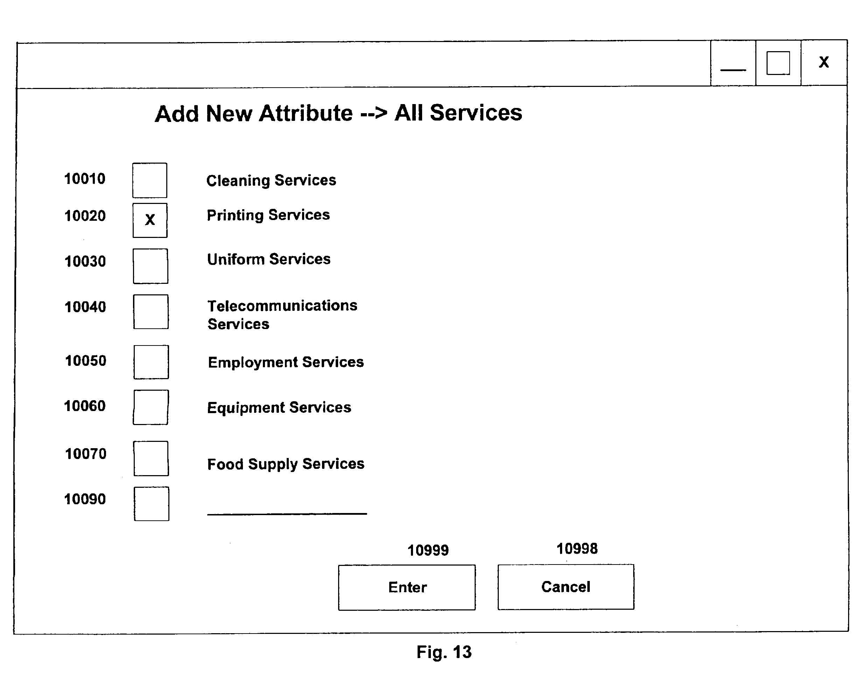

Figure 2 shows enterprise job management system 100 communicating with "Christa's Chili", a fictitious enterprise control center 200 located in Yachats, Oregon, a plurality of fictitious vendors (Noble Graphics 510, Jacques' Creations 520, Mike's Print Shoppe 530, Corp Images 540, Visual Appearances 550, Uniform Supply Company 560, and Snazzy Threads 570), and a plurality of fictitious enterprise local sites (Christa's Chili local sites in W. Lafayette, Indiana 210, in Rochester, Minnesota 220, and in Arlington, Virginia 230). The exemplary enterprise job management system shown in Fig. 2 will be discussed in more detail later in conjunction with the discussion of the exemplary screens shown in Figs. 13-23.

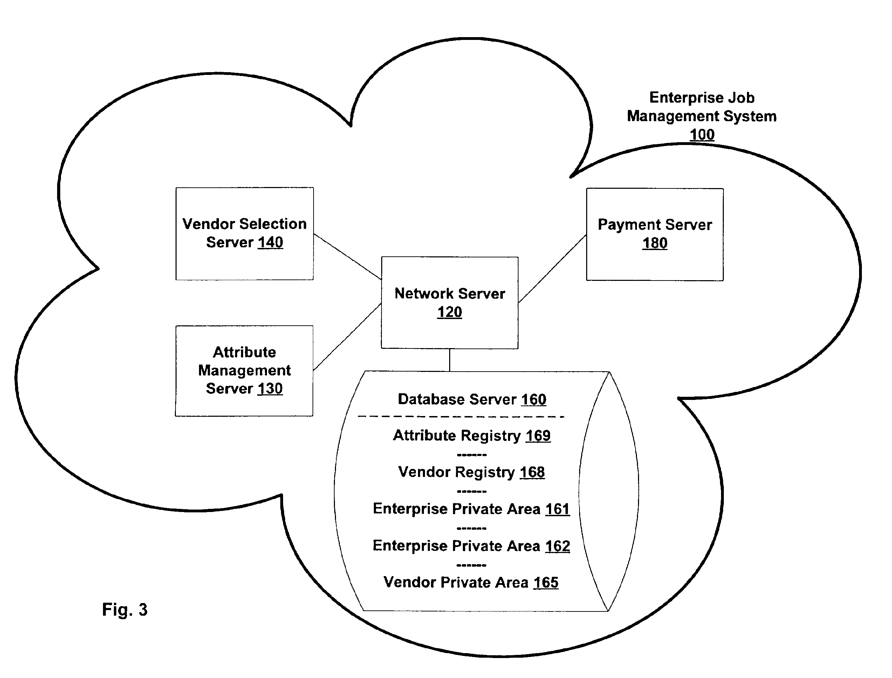

Figure 3 shows the enterprise job management system of Fig. 1 and Fig. 2 in more detail. Enterprise job management system 100 contains network server 120, connected to attribute management server 130, vendor selection server 140, database server 160, and payments server 180. In the preferred embodiment of the invention, servers 120 through 180 operate on a computer, such as the HP 9000 computer manufactured by the assignee of this invention, although other types of computing device(s) could be used and still fall within the spirit and scope of the invention. In the preferred embodiment, the HP 9000 computer is controlled by the HP-UX operating system. Network server 120 is operated by AOL server software, manufactured by America Online, Inc. Database server 160 is controlled by Oracle database server software, manufactured by the Oracle Corp. Vendor selection server 140, attribute management server 130, and payment server 180 are controlled directly by the HP 9000 computer in the preferred embodiment of the invention, suitably programmed according to the flowcharts described in more detail later. Those skilled in the art will appreciate that the operation of these servers could be performed by a single server (such as network server 120), other special purpose hardware, or through other means and still fall within the spirit and scope of the invention.

Network server 120 communicates with one or more enterprise control centers, vendors, and/or enterprise local sites such as those shown in Fig. 1. This communication is performed in a conventional manner via the Internet and the World Wide Web according to the preferred embodiment of the invention. An alternate embodiment has been contemplated where network server 120 communicates with one or more enterprise control centers, vendors, or enterprise local sites through a private network, such as an Intranet, local area network, or the like, or via a public network different from the Internet.

Database server 160 manages the data and other information stored in enterprise job management system 100. For example, database server 160 maintains enterprise private area 161 and enterprise private area 162. Database server 160 insures that enterprise private area 161 is only accessible by the enterprise control center and/or enterprise local sites authorized to access that data. Likewise, database server 160 insures that enterprise private area 162 is only accessible by the enterprise control center and/or enterprise local sites authorized to access that data. Similarly, database server 160 maintains vendor private area 165 for the use of a specific vendor.

Database server 160 also contains vendor registry 168 and attribute registry 169. Attribute registry 169 contains a master list of attributes that can be associated with job requests for all vendors. Vendor registry 168 contains a list of all vendors registered with enterprise job management system 100, along with the attributes they are able to perform for a specific job request. The operation of vendor registry 168 and attribute registry 169 will be discussed in more detail later.

The term "attribute" as used herein is defined as a quality or characteristic inherent in or ascribed to a job request. Some attributes are higher level attributes in a hierarchy of attributes, while other attributes are lower level attributes in the hierarchy. For example, a job request to print 1,200 posters in 2 colors on B3 glossy paper by next Thursday for $5.00 each would have the following exemplary attributes, among others: "printing services", "posters", "1,200", "2 colors", "B3", "glossy", "$5.00", and "Next Thursday". Those skilled in the art will appreciate that other qualities or characteristics can be inherent in or ascribed to a job request, such as a specific vendor, etc., and are also considered to be "attributes". The use of attributes will be described in more detail later in conjunction with the description of Figs. 13-23.

Attribute management server 130 controls the attributes associated with a job request. In a preferred embodiment, attribute management server 130 insures that master attribute registry 169 is maintained and up-to-date, and provides the master list of job attributes associated with a particular job request to the enterprise control center or enterprise local site. In addition, when enterprise job management system 100 sends a job request which originated with an enterprise control center to an enterprise local site, attribute management server 130 may not present all of the attributes contained in global attribute registry 169 associated with a specific job request; instead, attribute management server 130 typically provides a subset of these attributes. This subset is determined based on information provided to the enterprise job management system 100 by the enterprise control center, in a manner that will be described in more detail later.

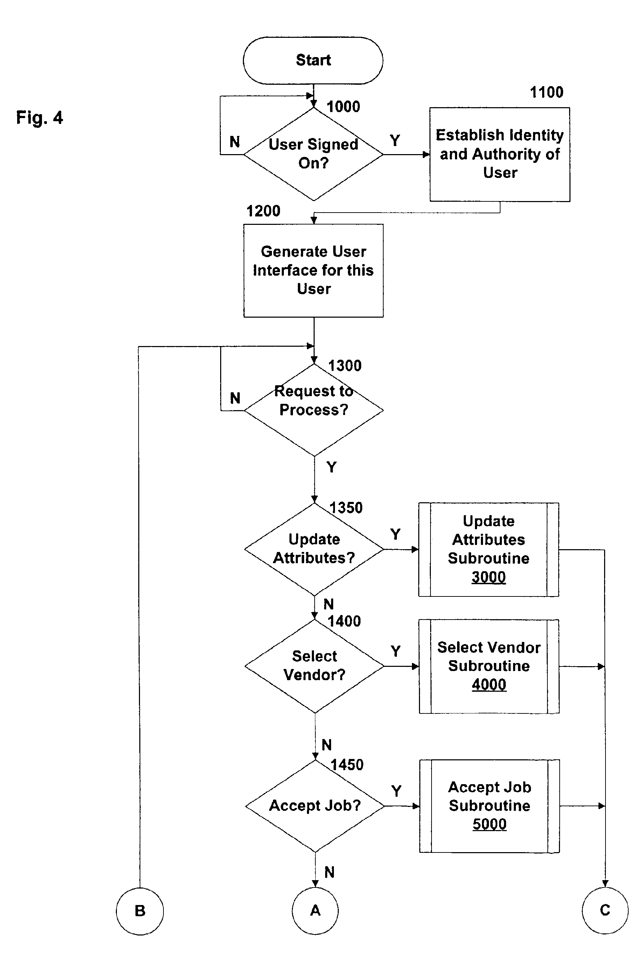

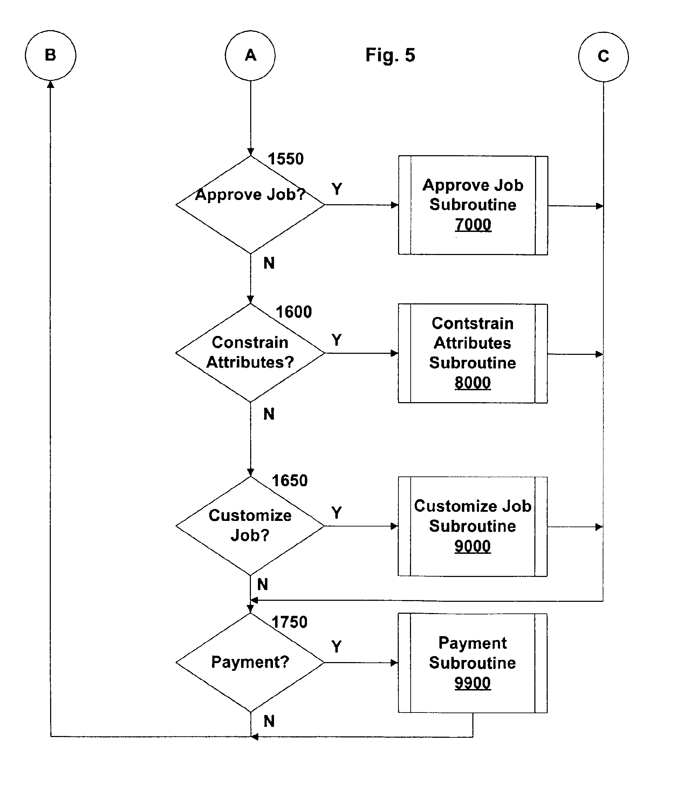

Figs. 4 and 5 show an overall flowchart of the operation of the enterprise job management system in the preferred embodiment of the invention. Block 1000 checks to see whether a user has signed on to enterprise job management system 100. If so, block 1100 establishes the identity and authority of the user. For the purposes of this invention, the term "user" refers to an enterprise control center, a vendor, or an enterprise local site. After block 1100 establishes the identity and authority of the user, block 1200 generates a user interface appropriate for this particular user. In one embodiment of the invention, enterprises and vendors will see a user interface customized for their particular purposes. This user interface appears different to a user at enterprise control center 200, enterprise control center 300, and enterprise control center 400. This customized user interface gives users of enterprise control center 200 the impression that enterprise job management system 100 is their private job management system, even though in reality it is being used by many others for their particular purposes as well. In addition, the user interface seen by a vendor 500 is different than the user interface seen by an enterprise control center. Likewise, the user interface seen by a user at enterprise local site 210, for example, will also be different. In fact, the user interface seen by enterprise local site 210 is largely determined by the amount of control over job choices given to enterprise local site 210 associated with enterprise control center 200, as will be explained in more detail later.

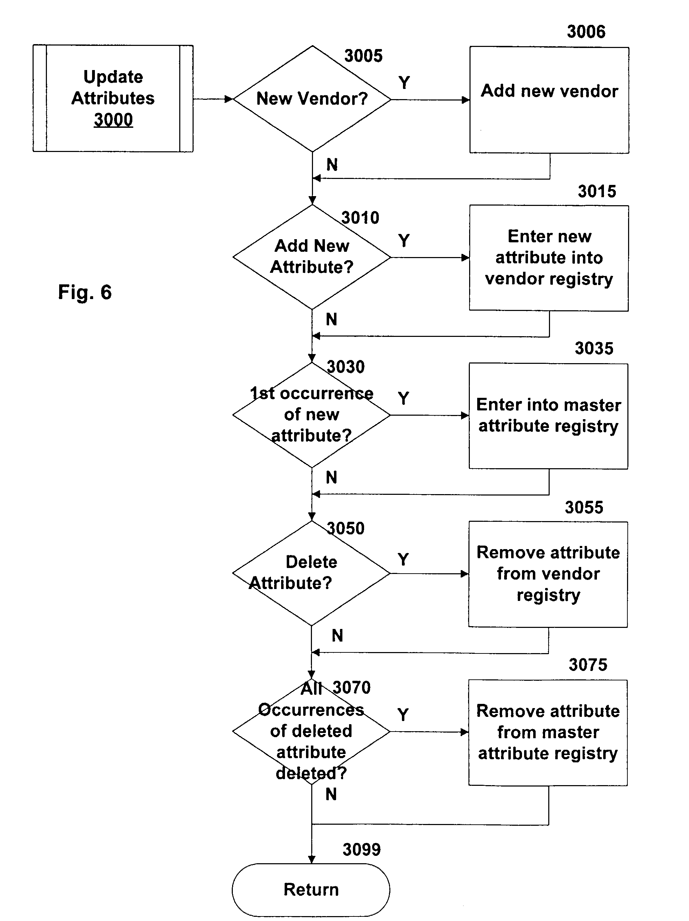

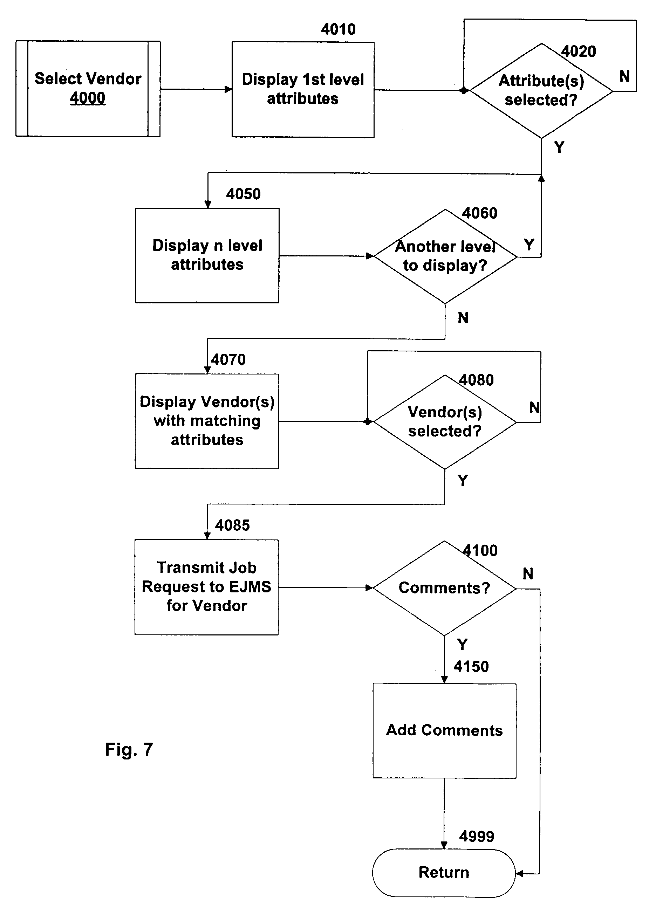

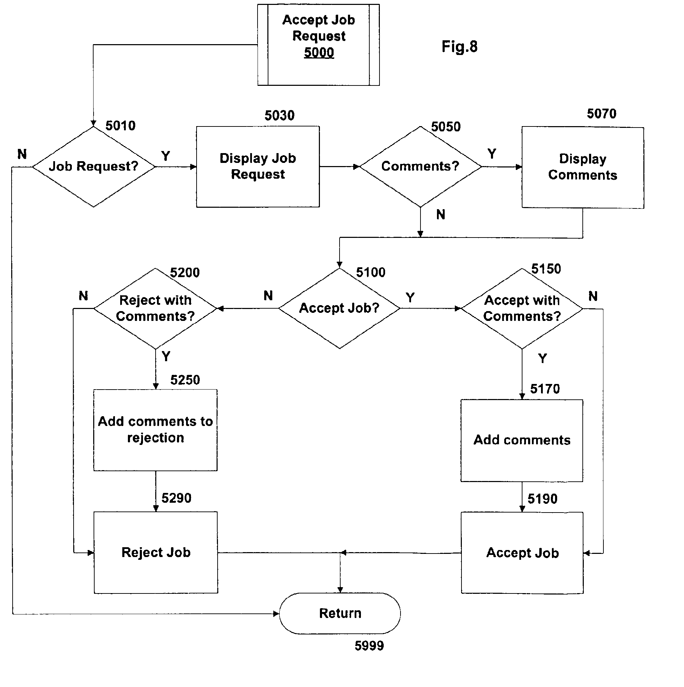

Block 1300 checks to see whether a request has been received from the user for action to be taken by the enterprise job management system 100. Enterprise job management system 100 can perform a variety of requests, some of which are shown in the subsequent blocks of Figs. 4 and 5. Block 1350 checks to see whether the request received is a request to update attributes. If block 1350 is answered affirmatively, block 3000 executes the update attributes subroutine of Fig. 6 in a manner that will be described in more detail later. If block 1350 is answered negatively, block 1400 asks whether the request received was a select vendor request. If so, block 1400 is answered affirmatively, and the select vendor subroutine 4000, as shown in Fig. 7, is executed. If block 1400 is answered negatively, block 1450 checks to see whether an accept job request has been received. If so, accept job subroutine 5000, as shown in Fig. 8, is executed.

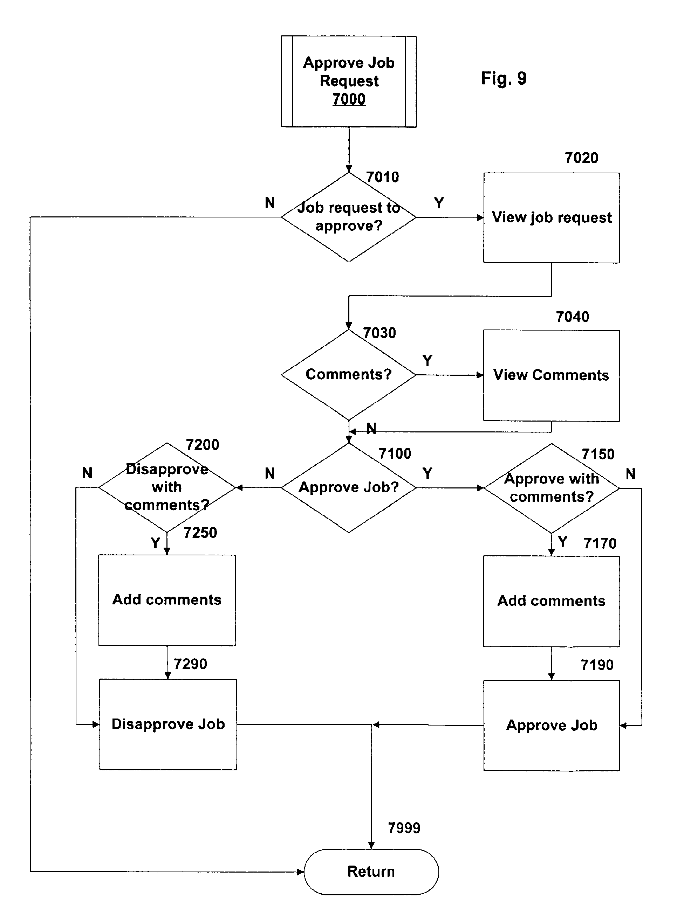

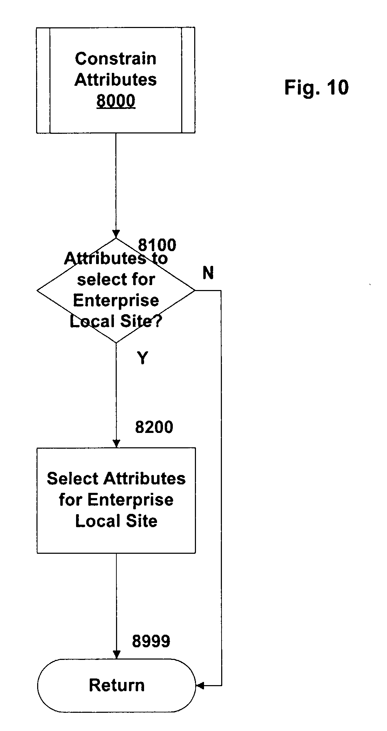

Referring now to Fig. 5, if block 1450 is answered negatively, block 1550 checks to see whether an approve job request has been received. If so, approve job request subroutine 7000 of Fig. 9 is executed. If not, block 1600 checks to see whether a constrain attributes for enterprise local sites request has been received. If so, constrain attributes for enterprise local sites subroutine 8000 is executed, as shown in Fig. 10.

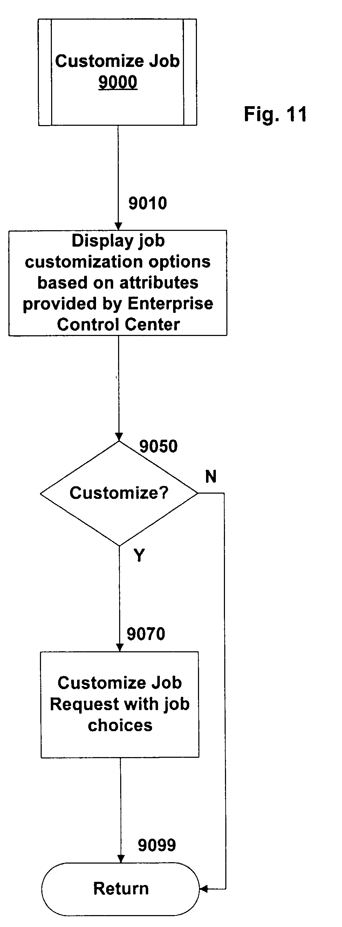

Block 1650 checks to see whether the request received was a customize job request. This request is typically received from an enterprise local site that was given the authority by its associated enterprise control center to customize the particular job request initiated by the enterprise control center, in a manner that will be described in more detail later. If this request was received, block 1650 is answered affirmatively, and customize job subroutine 9000, as shown in more detail in Fig. 11, is executed.

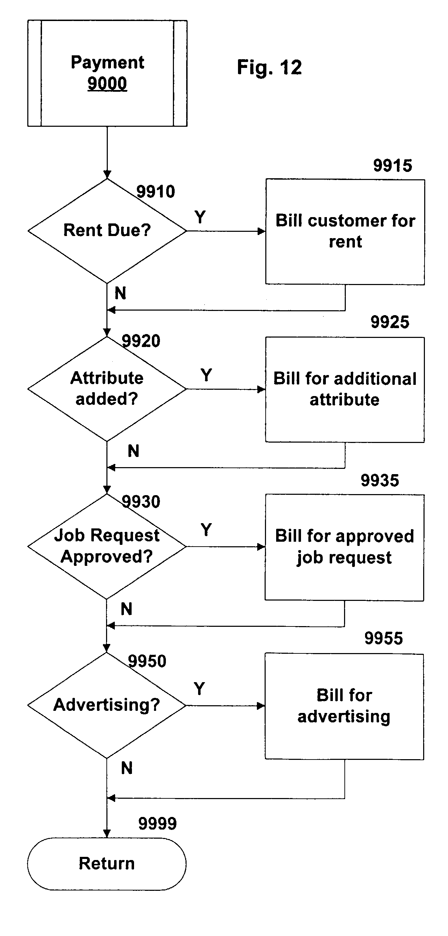

After any of the subroutines 3000 through 9000 are executed, they return to block 1750 to check to see whether payments are due for the services rendered by enterprise job management system 100. If so, determine payments subroutine 9900, as shown in Figure 12, is executed.

Figures 6-11 show how various requests received from enterprise control centers, vendors, and enterprise local sites are processed by the enterprise job management system in the preferred embodiment of the invention. Referring to Fig. 6, update attributes subroutine 3000 starts in block 3005, which asks if the vendor asking to update attributes is a new vendor. If so, block 3006 adds this new vendor to vendor registry 168 (Fig.3), and creates a vendor private area for this vendor. Block 3006 also obtains information about the vendor, such as name, address, phone, email address, web address, billing information, etc. Block 3010 then asks whether the vendor would like to add a new attribute. If so, this new attribute is entered into the vendor registry 168, shown in Fig. 3, in block 3015. Block 3030 checks to see whether this new attribute is the first time any vendor has used this attribute. If so, block 3035 enters this new attribute into the master attribute registry 169, as shown in Fig. 3. Block 3050 checks to see whether the vendor is requesting that the attribute be deleted. This could occur if the vendor temporarily or permanently has lost the ability to perform (or no longer desires to perform) a particular function associated with the job requests. For example, if the vendor's color printer is in the process of being replaced, the vendor may choose to delete the attribute that indicates to perspective customers (e.g., enterprise control centers) that they can perform color printing when in fact, at least at this particular time, they cannot. In this case, block 3050 is answered affirmatively and block 3055 removes the attribute from the vendor registry 168. Block 3070 checks to see whether all instances of this attribute have now been deleted from all vendor registries. If so, block 3075 removes this attribute from master attribute registry 169 of Fig. 3. The subroutine returns in block 3099 to block 1750 of Fig. 5.

The operation of select vendor subroutine 4000 of Fig. 7 will now be discussed. Block 4010 displays first level attributes to a user. In the preferred embodiment, the user can either be an enterprise control center or an enterprise local site, as will be described in more detail later. Users select attributes to help them select a vendor to perform the job requested. If block 4020 is answered affirmatively, subroutine 4000 executes blocks 4050 and 4060 through subsequently more refined levels of attributes, until one or more vendors with matching attributes can be displayed in block 4070. Once the vendors with matching attributes are displayed in block 4070, block 4080 checks to see whether one or more vendors have been selected by the user. In the preferred embodiment, only one vendor will be selected by the user, but an alternate embodiment has been contemplated where multiple vendors can be selected, and the job request can be handled in parallel by these multiple vendors. In any event, block 4085 transmits the job request to a vendor private area 165 of Fig. 3. The vendor can also be notified that information is present in vendor private area 165, or the vendor can just find this information the next time they log onto enterprise job management system 100. Alternatively, the job request can be transmitted directly to the vendor via his computer, fax machine, or through some other means. Block 4100 checks to see whether the user wishes to add any comments with the job request. Depending on the complexity of the job, and on the number of attribute choices given to the user, the user may indeed wish to add comments. If block 4100 is answered affirmatively, block 4150 adds the comments to the job request. In any event, flow of control returns in block 4999 to block 1750 of Fig. 5.

The operation of accept job subroutine 5000 of Fig. 8 will now be discussed. This subroutine will typically be executed by a vendor who has been notified or otherwise determines that a job request has been placed in its private area 165. Block 5010 checks to see whether the job request has been received. If so, block 5030 displays the job request for the vendor to see. Block 5050 then checks to see whether there were comments associated with the job request. If so, block 5070 displays these comments along with the job request. Block 5100 asks the vendor whether he wants to accept the job or not. If so, block 5150 asked whether he wishes that a comment be associated with his acceptance of the job. If so, block 5170 appends the comment to an acknowledgement sent to the requestor in block 5190. If the vendor does not wish to accept the job in block 5100, block 5200 asks whether the vendor would like to append comments to the rejection sent to the user in block 5290. If so, block 5250 appends the comments to the rejection. In either event, information about the job request is sent to the enterprise private area associated with the user in database server 160 of Fig. 3. Flow of control returns in block 5999 to block 1750 in Fig. 5.

The operation of approve job request subroutine 7000 of Fig. 9 will now be discussed. This subroutine is typically executed by an enterprise control center or enterprise local site that has received notification or otherwise determines that the status of a job request has been placed in its enterprise private area. Block 7010 checks to see whether a job request has been placed in their private area to approve. Even though the job request has been accepted by the vendor, it needs to also be approved by the enterprise control center or enterprise local site in order for the job request to be filled, in the preferred embodiment. Another embodiment has been contemplated where the acceptance of the vendor is sufficient to allow the job request to be filled.

If block 7010 is answered affirmatively, block 7020 views the job request and the indication from the vendor whether the job request was approved or rejected. If comments are associated with the job request approval or rejection, block 7030 is answered affirmatively, and the comments are displayed in block 7040. Block 7100 asks the user (typically the enterprise control center or enterprise local site) whether he wants to approve the job or not. If so, block 7150 asked whether he wishes that a comment be associated with his approval of the job. If so, block 7170 appends the comment to the approval notification sent to the vendor in block 7190. If the user does not wish to approve the job in block 7100, block 7200 asks whether the user would like to append comments to the disapproval sent to the vendor in block 7290. If so, block 7250 appends the comments to the disapproval. In either event, information about the job request is sent to the vendor private area associated with the vendor in database server 160 of Fig. 3. Flow of control returns in block 7999 to block 1750 in Fig. 5.

As one skilled in the art will appreciate, the subroutines shown in Figs. 8 and 9 can be executed repeatedly, resulting in an efficient negotiation session between the user and a vendor for a job request. On the other hand, especially if the attributes provide sufficient level of details that all parties understand what was expected of the job, there may be little interaction such as that shown in Fig. 8 and Fig. 9 between the user and the vendor. In any event, flow of control returns in block 7999 to block 1750 of Fig. 5.

The operation of constrain attribute subroutine 8000 of Fig. 10 will now be discussed. Block 8100 checks to see whether there are attributes to be selected for the enterprise local site. The enterprise control center may wish to select a subset of attributes to be transmitted to the local site, so the local site does not have access to all of the attributes available to the enterprise control center for this particular job request. In this manner, the local site will be able to select job choices among the subset of these attributes, and provide further instructions to the vendor that allows the job request to be filled based on the attributes provided by the control center and the job choices selected by the local site, in the manner that will be discussed in more detail later. If block 8100 is answered affirmatively, block 8200 selects the attributes that will be seen by the enterprise local sites, and the subroutine returns in block 8999 to block 1750 of Fig. 5.

The operation of job customization subroutine 9000 will now be discussed, as shown in Fig. 11. This subroutine typically is executed by enterprise local sites that have been given authority by the enterprise control center to customize a particular job request. Block 9010 displays job customization options based on attributes provided from the enterprise control center. These job customization options represent job choices that can be selected by the local site among the subset of attributes, as provided by the enterprise control center. Block 9050 checks to see whether the user, typically an enterprise local site, wishes to customize this job request by job choices. If so, block 9050 is answered affirmatively and block 9070 customizes this job request with job choices. In any event, block 9099 returns to block 1750 of Fig. 5.

Payment subroutine 9900 of Fig. 12 will now be discussed in more detail. Block 9910 checks to see whether a payment, broadly referred to herein as "rent" is due. In the preferred embodiment, "rent" can be received from an enterprise control center, a vendor or an enterprise local site. These users are all preferably charged rent for using enterprise job management system 100. This rent can be periodic in nature and allow the users unlimited access to job enterprise job management system 100 over a specified period of time, such as a month, or it can be based on the amount of usage they may have of enterprise job management system 100, or other factors. In any event, if block 9910 is answered affirmatively, the user is billed for rent in block 9915. This billing operation can be performed either by sending a bill in the mail, by deducting a certain amount of money from an account already established with the user, by charging a credit card, smart card or other type of electronic payment structure, or through some other mechanism. In any event, block 9920 checks to see whether an attribute has been added. As previously discussed, vendors can add attributes to indicate additional capability to perform job requests. If a vendor adds an attribute, the vendor is preferably charged for this added attribute, and a bill for the additional attribute is sent to the vendor in block 9925.

Block 9930 asks whether a job request has been approved. As previously discussed, job requests must be both accepted by the vendor and approved by the enterprise in the preferred embodiment, although an alternate embodiment contemplates that acceptance by the vendor alone is sufficient. In any event, block 9935 bills the vendor for a payment associated with this job request. In a preferred embodiment of the invention, this payment is based on a percentage of the value of the job that will be performed by the vendor, such as 5%. Other payment mechanisms have been contemplated by the inventors and fall within the spirit and scope of this invention. For example, one embodiment of the invention allows for equipment to be provided to a vendor, where the equipment is paid for (in whole or in part) by an increased percentage of the value of the job performed on the equipment. In other words, this "provided equipment" is given to the vendor either free of charge or with a discount over normal purchase or lease terms. For example, if the job request is performed on this provided equipment, the vendor is changed 10% of the value of the job, instead of the 5% the vendor would be charged for a job performed on "non-provided" equipment (i.e., equipment the vendor has paid for or leased traditionally).

Another embodiment allows for equipment to be provided to an enterprise local site or enterprise control center. In this embodiment, the "provided equipment" is paid for (in whole or in part) by the "rent" charged to the enterprise local site or enterprise control center.

In any event, billing is handled in the manner described above with respect to block 9915. Block 9950 then checks to see whether a payment should be made for an advertisement. Enterprise job management system 100 preferably includes advertisements that can allow vendors, or perhaps even enterprise control centers, local sites, or others, to advertise to each other regarding their particular requirements, goods, and services. In any event, usage of these advertisements triggers the payments to enterprise job management system 100. These payments can be based on the size of the advertisement , the number of times the advertisement is displayed to users, the number of times the advertisement is clicked on or otherwise selected by the user, the combination of these factors, or different factors. In any event, flow of control returns in block 9999 to block 1750 of Fig. 5.

Figures 13 through 23 show exemplary screens used to communicate to users of the enterprise job management system in filling an exemplary job request from a fictitious enterprise control center. These figures will be useful in describing the operation of flowcharts of Figures 4-12 in more detail.

Figures 13-16 show how a vendor, such as Mike's Print Shoppe 530 of Fig. 2, can add a new attribute using the flowchart shown in Fig. 6. As Fig. 13 shows, a series of first or high level attributes are displayed to the vendor. First level attributes displayed to the vendor categorize all the job requests that can be processed by enterprise job management system 100. Exemplary attributes are cleaning services 10010, printing services 10020, uniform services 10030, telecommunications services 10040, employment services 10050, equipment services 10060, and food supply services 10070. As those skilled in the art will appreciate, these attributes are a small fraction of the number of possible attributes, but are shown here in a limited number to assist in the conceptual explanation of the invention. In any event, attribute 10090 is shown as a blank attribute. If the vendor wishes to add an attribute at this first high-level, he can do so by checking the box associated with attribute 10090 and entering the description of the attribute in the blank next to the box. In our particular example, since Mike's Print Shoppe is not a new vendor to enterprise job management system 100, block 3005 is answered negatively. Mike selects the attribute associated with block 10020 printing services and presses the enter key at the bottom of this screen.

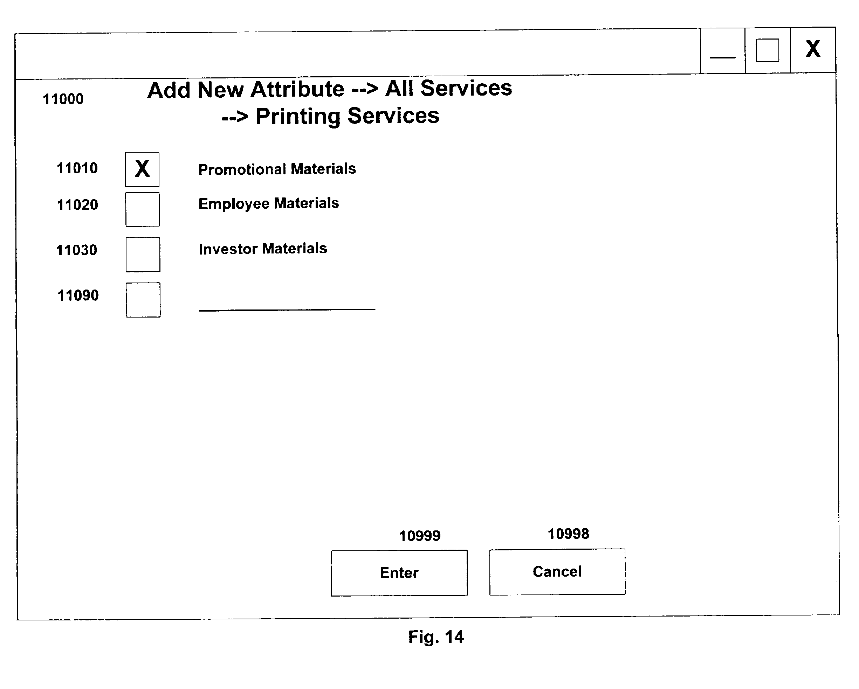

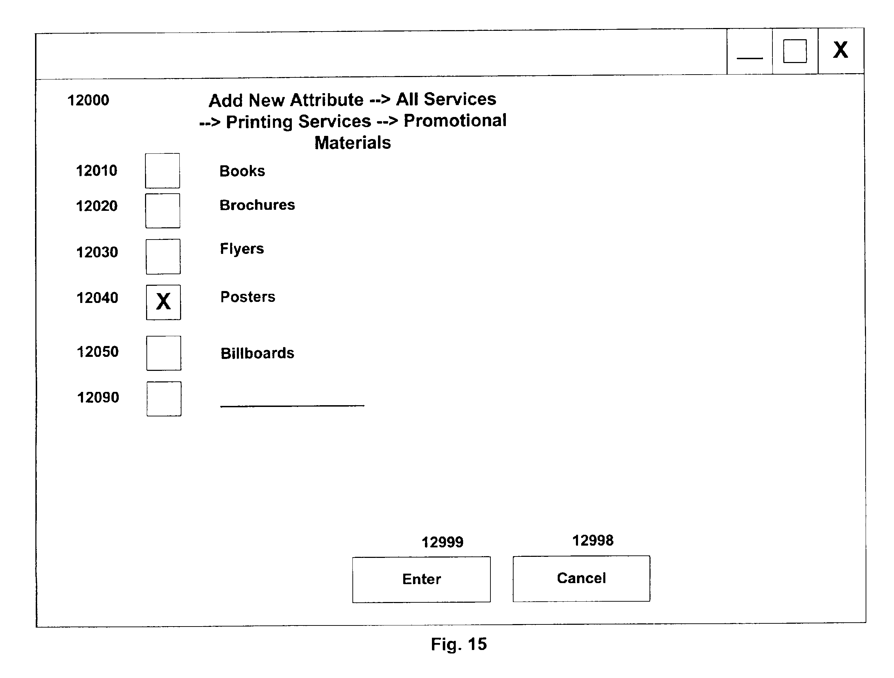

This brings Mike's Print Shoppe to a screen having an appearance like Fig. 14, which shows a next level of attributes. In this level of attributes, Mike's Print Shoppe sees attributes associated with printing services, such as promotional materials attribute 11010, employee materials attribute 11020, investor materials attribute 11030, and blank attribute 11090. Mike's Print Shoppe selects attribute 11010 by placing an "X" in the box next to the attribute promotional materials. Mike's Print Shoppe than selects enter key 10999. At this point, Figure 15 is displayed.

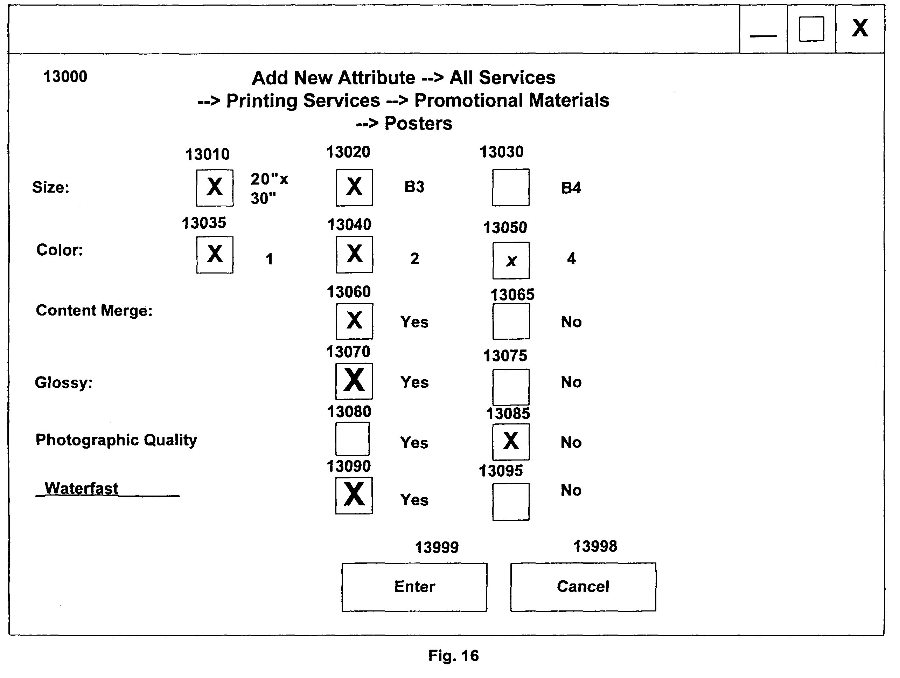

Figure 15 shows yet another, lower level of attributes associated with promotional materials, such as books 12010, brochures 12020, flyers 12030, posters 10240, billboards 12050, and blank attribute 12090. Mike's Print Shoppe selects posters and presses enter key 12999, thereby arriving at a screen like Fig. 16.

The screen shown in Fig. 16 is yet another, lower level of attributes associated with posters, which itself is associated with promotional materials, printing services, etc. All of these attributes describe an aspect of printing posters in a hierarchical fashion. Attribute 13010 describes a poster size of 20 inches by 30 inches. Attribute 13020 describes European size B3 for posters, while attribute 13030 describes European size B4. Attributes 13035, 13040 and 13050 describe one, two, and four color printing, respectively. Attribute 13060 covers "content merge", which allows content to be customized from poster to poster, if checked (similar to the "mail merge" feature of Microsoft Word for Windows). Attribute 13070 provides for glossy printing, while attribute 13080 provides for photographic quality printing. Attribute 13090 is a blank attribute.

In our example, Mike's Print Shoppe has deselected attribute 13050 (shown by a small "x"), since its four color printing press is not operational at this time. This operation resulted in block 3050 of Fig. 6 being answered affirmatively, and this attribute has been removed from the vendor registry for Mike's Print Shoppe in block 3055. In addition, Mike's Print Shoppe has added an attribute for glossy printing by checking attribute 13070, (shown by a large "X") and this attribute has been added to the vendor registry for Mike's Print Shoppe in block 30155. Finally, Mike has checked blank attribute 13090 and has typed in the word "Waterfast". Mike is able to add this attribute, since he has just been provided equipment that can perform waterfast printing free of charge from the operators of enterprise job management system 100, in exchange for a 10% payment on the cost of any job performed on this equipment via enterprise job management system 100. The operation of checking blank attribute 13090 not only adds this attribute into the vendor registry associated with Mike's Print Shoppe in block 3015, but since this is a brand new attribute that has never been entered by any vendor, it is also entered into the master attribute registry in block 3035. When Mike is done, he presses enter key 13999.

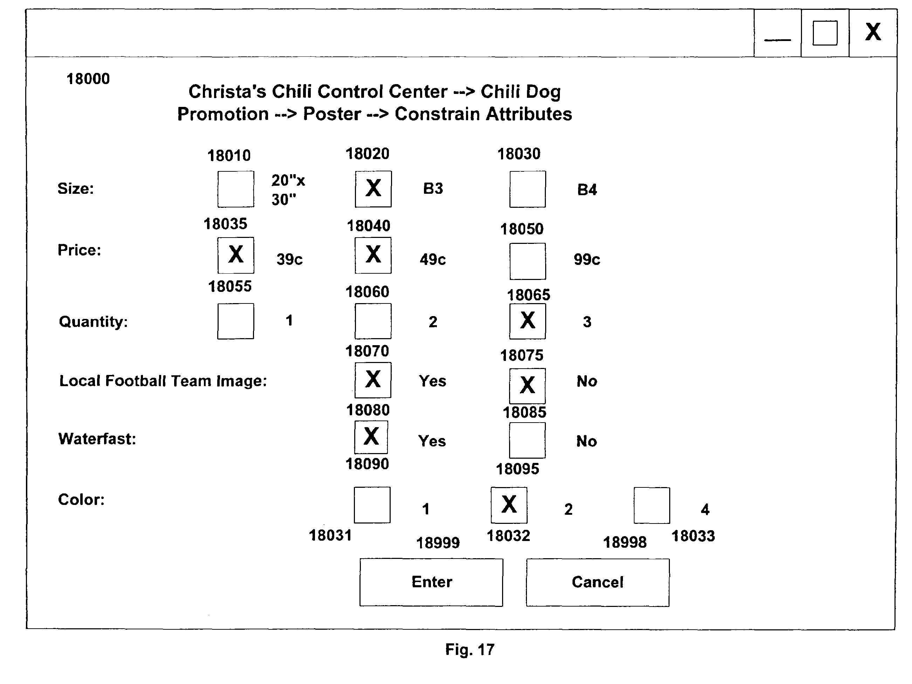

Unbeknownst to Mike's Print Shoppe in Cudahy, Wisconsin, an enterprise control center, Christa's Chili, in Yachats, Oregon, is trying to find a vendor to print posters for a promotional campaign they would like to have. But before a vendor is selected, Christa's Chili's control center would like to give their local sites limited authority to customize the posters they receive to meet their local needs. Using the enterprise job management system 100, Christa's Chili begins by requesting that attributes be constrained to her local sites, by executing subroutine 8000 of Fig. 10. When she chooses to do this, she will see a screen such as that shown in Fig. 17. Note that attributes associated with printing posters are shown in Fig. 17, such as size, price, quantity, etc. By checking size attribute box B3 and neither of the other two boxes, Christa is not allowing her local sites to choose the size of the poster for the Chili dog promotion, instead requiring that the size be B3. In this manner, Christa is providing her local sites with a subset of the attributes she has available to her to describe this job request. By checking both the 39 cents and 49 cents price box for the price of the chili dog during the promotion, Christa is providing her local sites the option of which of these two prices to pick. Note, however, that since Christa did not check the 99 cents box, this will not be a choice presented to the local site. Likewise, Christa is mandating each local site to order three posters, which must be waterfast, and in two colors. Note also the Christa gives her local sites the option of whether to include an image of their local football team or not by checking both the "yes" box and the "no" box.

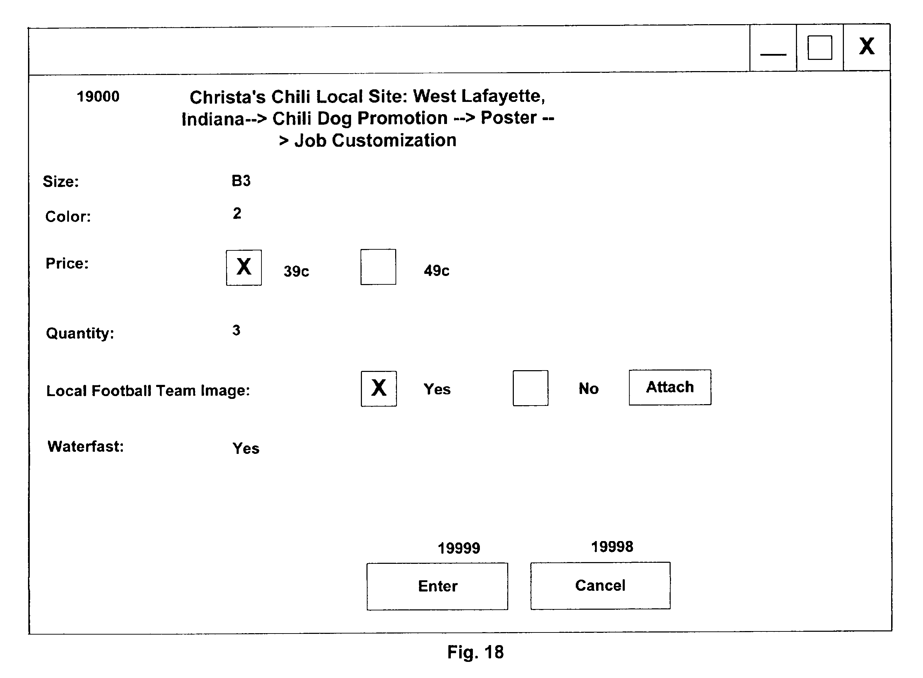

When one of the local sites of Christa's Chili, such as local site 210 in West Lafayette, Indiana signs on to enterprise job management system 100 and requests job customization, a display of the job customization options based on the attributes set out by the enterprise control center are displayed, such as that shown in Fig. 18. Note that only the B3 size is displayed, since enterprise control center 200 (Christa's Chili) did not specify any other size. Likewise, the two prices allowed by the enterprise control center are presented, as are options whether to include an image of the local football team in the poster or not. As can be seen, the local site 210 has limited authority to customize this job request. However, this limited authority may be sufficient to give a much-needed local flavor to the poster, and make the people patronizing the Christa's Chili local site in West Lafayette, Indiana feel like they are patronizing an establishment that belongs in their hometown. Local site 210 selects the 39 cent price of the chili dog, and attaches an image of the local football team. These selections are "job choices" selected by the local site among the subset of the attributes provided to it by the enterprise control center. After these job choices are made, local site 210 presses enter key 19999. Enterprise job management system 100 creates a record containing these job choices and stores this record in enterprise private area 161.

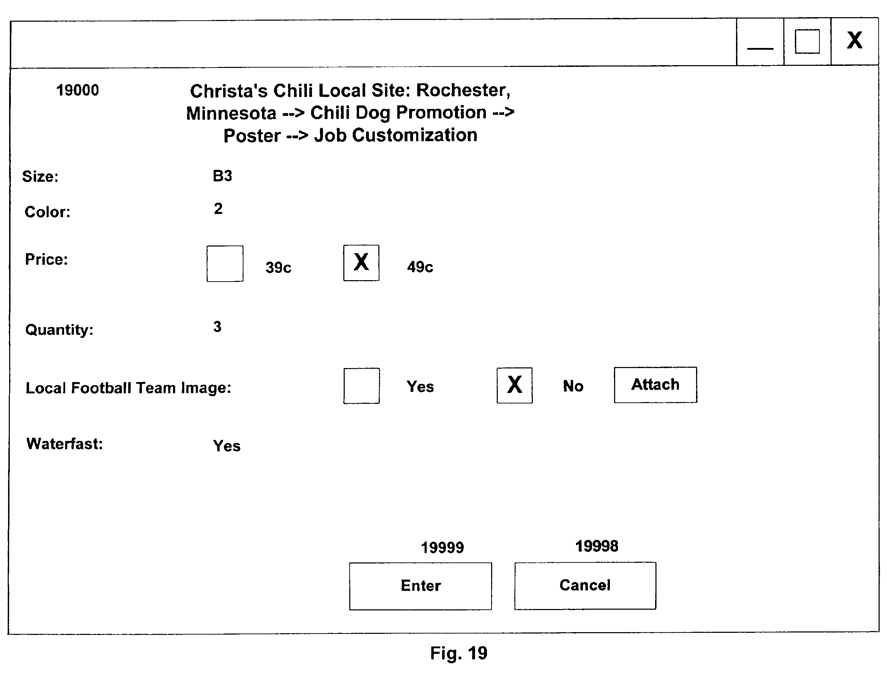

When another one of the local sites of Christa's Chili, such as local site 220 in Rochester, Minnesota signs on to enterprise job management system 100 and requests job customization, a display of the job customization options based on the attributes set out by the enterprise control center are displayed, such as that shown in Fig. 19. Unlike local site 210, local site 220 selects the 49 cent price of the chili dog, and decides not to attach an image of the local football team, since they aren't having a very good year. Again, these selections are job choices selected by the local site among the subset of the attributes provided to it by the enterprise control center. Enterprise job management system 100 creates a record containing these job choices and stores this record in enterprise private area 161.

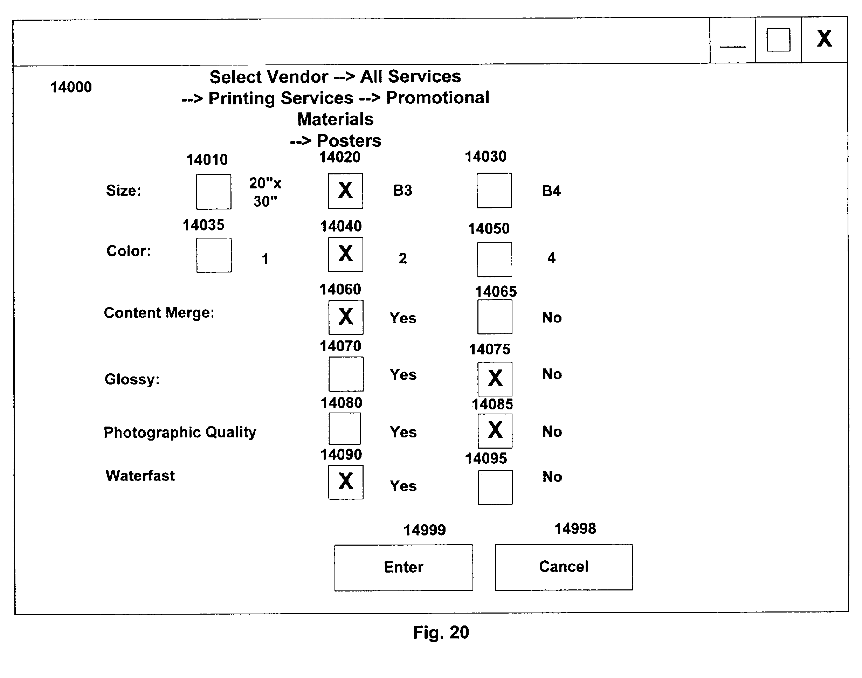

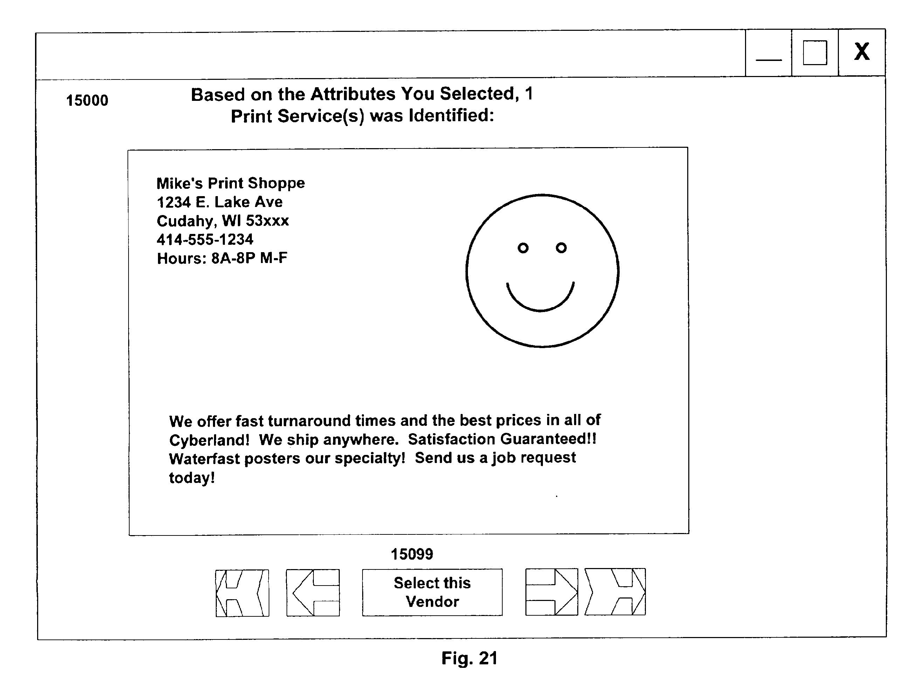

Christa's Chili enterprise control center selects a vendor to print these posters using the flowchart shown in Fig. 7. Christa's Chili has already navigated through several screens to be at the screen shown in Fig. 20, where the attributes for posters are displayed. Note that attributes 14010 through 14085 are the same attributes that were presented to Mike's Print Shoppe in the screen shown in Fig. 16. Note also that a new attribute 14090, "Waterfast", is also displayed. Since Mike's Print Shoppe added that attribute to the master attribute registry, this attribute can be presented to users such as Christa's Chili. This is fortuitous for both Christa's Chili and Mike's Print Shoppe, as we shall soon see, since Christa's Chili's control center is located in a very rainy part of the country, and she was thrilled to see that she can now obtain waterfast posters, which she would like her local sites to hang out in the elements where they can be seen by all who pass. Christa therefore checks waterfast attribute 14090 in addition to two color attribute 14040, content merge attribute 13060, and B3 attribute 14020, and presses search key 14099. When this is done, Christa then sees the display of vendors with matching attributes, such as that shown in Fig. 21. Christa's Chili can then view information about the vendor including address, graphical information, hours, and other advertising or related information. Christa is particularly impressed that Mike's Print Shoppe offers the best pricing in "Cyberland" and is thrilled that they consider waterfast posters to be their specialty. Christa in fact is so impressed by this that she selects this vendor by pressing select key 15099. Note that in our hypothetical example, Mike's Print Shoppe is the only Print Shoppe that can be selected, because Mike's Print Shoppe is the only one that has identified the attribute of waterfast printing, at least at this point in time. Note that if Christa's Chili selected attribute 14050, four color, Mike's Print Shoppe would not be selected because Mike does not offer four color printing at this time. This would result in an indication to the user that no vendors were located that met her criteria, and it would give her an opportunity to enter another criteria.

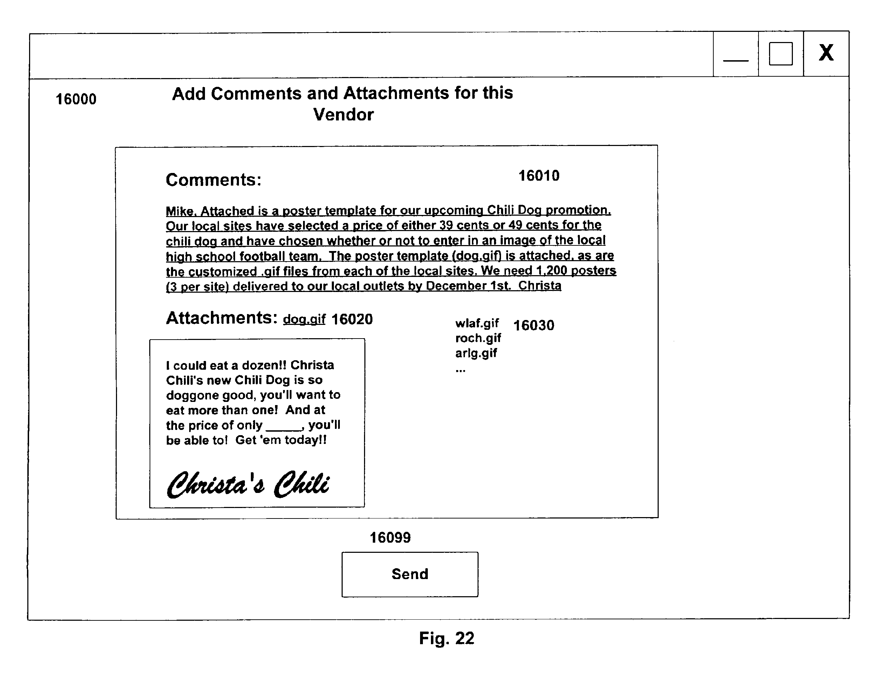

When Christa's Chili presses select key 15099, a screen such as that shown in Fig. 22 is displayed. This screen gives Christa's Chili the opportunity to add comments and attachments to the job request. Comment 16010 provides additional information to Mike's Print Shoppe, such that the job request is for posters for an upcoming Chili dog promotion, and that Christa's local sites had the option to select a price, and to enter an image of the local high school football team. The comments also indicate quantity and due date. Those skilled in the art will appreciate that quantity, price, due date, turnaround time and other factors could very well be attributes themselves and are not required to be comments. In one embodiment, the comments themselves are considered to be an "attribute". In addition, a lower level attribute of the "comment" attribute could be whether the comment is intended to be visible to those other than the original recipient (e.g., other vendors, local sites, etc.) or not.

In addition to the comments, Christa's enterprise control center also attaches a printable file of a template of the poster she wishes to have prepared by the Print Shoppe (dog.gif), and also attaches the job choices from the local sites in one or more files (wlaf.gif, roch.gif, arlg.gif). The attachments containing the job choices are typically much smaller than the template file, since they only contain a small amount of customization to be done to the template. In our example, these files contain the selected price of the chili dog, as well as (optionally) a small image of the local high school football team. In any event, the selected vendor would use their "content merge" capabilities to merge the job choice files into the templates to print a unique poster for each enterprise local site.

Those skilled in the art will appreciate that Christa could have sent out the graphics design aspects of the poster to another vendor, such as Noble Graphics 510. After this job was done, a second job request could have been sent out to get the poster printed. Alternatively, Christa could have sent a single job request to Noble Graphics for both design and printing of the poster, who in turn could have used enterprise job management system 100 to subcontract out the printing portion of the job request to Mike's Print Shoppe. This could have been done either with or without the knowledge of Christa' s Chili. In fact, Christa could have delegated the entire job request fulfillment process to a vendor, such as Noble Graphics, who would create the job request on behalf of the enterprise control center, such as Christa's Chili. As those skilled in the art will appreciate, enterprise job management system 100 can handle many different jobs that can be assumed to be part of a larger job or jobs. In any event, Christa sends the job request by pressing submit key 16099. This transmits the job request to the vendor private area of enterprise job management system in block 4085 of Fig. 7. Christa's comments and attachments are also sent along in block 4150.

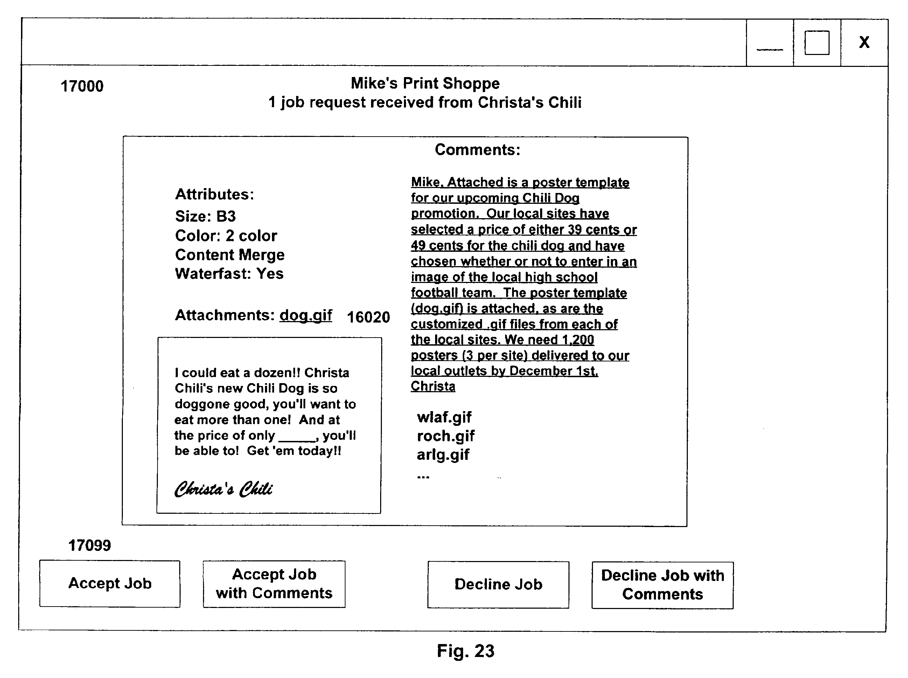

Figure 23 shows a screen that Mike's Print Shoppe will see after they execute accept job subroutine 5000 of Fig. 8. Mike's Print Shoppe sees the attributes selected by Christa's Chili, sees the comments, including the attachments. Mike's Print Shoppe decides to accept the job by pressing accept job key 17099, and acceptance (and preferably approval) of the job is communicated in a manner that has been discussed. Mike's Print Shoppe then prints the job and sends the posters to the local sites in time for the chili dog promotion. A payment is preferably made to enterprise job management system 100 in conjunction with the performance of the job, in accordance with the flowchart of Fig. 12, as has been discussed. Specifically, since the job request was fulfilled on equipment provided to the vendor by the operators of enterprise job management system 100, a payment of 10% of the value of the job is made from the vendor to enterprise job management system 100. Mike's Print Shoppe would also be preferably charged for the advertising that was displayed to Christa's Chili, as well as the added attribute of "Waterfast printing". Other payments could also be made, as was discussed in more detail in accordance with the flowchart of Fig. 12.

While a relatively simple example has been provided that shows how the invention could be used to generate a poster, those skilled in the art will appreciate that enterprise job management system 100 can be used to handle much more complicated job requests than the one described above. For example, an enterprise control center such as Christa's Chili may decide that its employees at local sites should have uniforms fitting within both the corporate image and local customs, weather, etc. Christa can use enterprise job management system 100 to find a vendor that can design uniforms, such as Corp Images 540 and Visual Appearances 550 (Fig. 2). She may again decide to give her local sites limited choices in this uniform selection, such as short sleeves or long sleeves, short pants or long pants, patch design, etc. After the uniform is designed, Christa can again use enterprise job management system 100 to find a vendor that can manufacture the uniforms, such as Uniform Supply Company 560 and Snazzy Threads Company 570 (Fig. 2). Again, enterprise job management system 100 allows for efficient selection of a vendor to perform a job for an enterprise control center, and also allows for an enterprise local site to customize a job request to fit local needs by making job choices among the subset of attributes provided to it by the enterprise control center. This approach provides a mechanism to assure an enterprise that it maintains integrity and end-to-end quality of its job requests.

## Claims

1. A method of managing job fulfillment for an enterprise having at least one control center, comprising the steps of:
storing a first job request having a first set of attributes;
automatically searching (4000) a vendor registry for a vendor having the ability to fulfill the job request;
identifying (4070) a vendor having the ability to perform the job request having the first set of attributes; and
selecting (4080) the vendor having the ability to perform the job request having the first set of attributes.

2. The method of claim 1, further comprising the steps of:
selecting the first set of attributes from a master list of attributes;
adding (3010, 3015) a new attribute to the master list of attributes based on a vendor's new capability; and
creating a second job request having a second set of attributes selected from the master list of attributes, wherein one of the attributes from the second set of attributes is the new attribute added to the master list of attributes.

3. The method of claim 1, further comprising the steps of:
allocating a private area for information of a first control center; and
restricting a second control center from accessing information in the private area.

4. an enterprise job management system, comprising:
a network server (120) for connecting to a first enterprise control center and a plurality of vendors;
a first enterprise local site associated with the first enterprise control center.
an attribute server (130) for specifying a plurality of attributes associated with a job request, for presenting a subset of the plurality of attributes to the first enterprise local site, and for receiving job choices from the first enterprise local site based on the subset of the plurality of attributes, wherein the network server instructs that the job request be fulfilled based on the plurality of attributes and the job choices selected by the first enterprise local site; and
a vendor selection server (140) for selecting a vendor among the plurality of vendors based on the plurality of attributes.

5. The enterprise job management system of claim 4, wherein the job request is transmitted to the vendor selected by the vendor selection server.

6. The enterprise job management system of claim 5, wherein an indication that the job request was accepted by the vendor selected by the vendor selection server is transmitted by the network server to the first enterprise control center.

7. The enterprise job management system of claim 4, wherein the network server connects to a plurality of enterprise control centers.

8. The enterprise job management system of claim 7, wherein the enterprise job management system further comprises:
a database server (160) having a first private area for a first enterprise control center of the plurality of enterprise control centers, and a second private area for a second enterprise control center of the plurality of enterprise control centers;
wherein the first enterprise control center is restricted from accessing information in the second private area, and the second enterprise control center is restricted from accessing information in the first private area.

9. An enterprise job management system, comprising:
a network server (120) for connecting to a plurality of enterprise control centers and a plurality of vendors;
an attribute server (130) for specifying a plurality of attributes associated with a job request;
a vendor selection server (140) for selecting a vendor among the plurality of vendors based on the plurality of attributes; and
a database server (160) having a first private area for a first enterprise control center of the plurality of enterprise control centers, and a second private area for a second enterprise control center of the plurality of enterprise control centers;
wherein the first enterprise control center is restricted from accessing information in the second private area, and the second enterprise control center is restricted from accessing information in the first private area.

10. The enterprise job management system of claim 9, wherein the job request is transmitted to the vendor selected by the vendor selection server and wherein an indication that the job request was accepted by the vendor selected by the vendor selection server is transmitted by the network server to the first enterprise control center.

11. The enterprise job management system of claim 9, wherein the network server also connects to a first enterprise local site associated with the first enterprise control center.

12. The enterprise job management system of claim 9, wherein the attribute server presents a subset of the plurality of attributes to the first enterprise local site and wherein the attribute server receives job choices from the first enterprise local site based on the subset of the plurality of attributes.

13. The enterprise job management system of claim 12, wherein the network server instructs that the job request be fulfilled based on the plurality of attributes and the job choices selected by the local site.

14. A business method of obtaining revenue from an enterprise job management system communicating over a computer network with an enterprise control center and a plurality of vendors, comprising the steps of:
matching the enterprise control center to a first vendor based on a plurality of attributes associated with a job request;
obtaining revenue based on the fulfillment of a job request;
collecting a first payment from the first vendor for maintaining the registration of the first vendor in the enterprise job management system; and
collecting a second payment from the enterprise control center for allowing the enterprise control center to use the enterprise job management system.

15. The business method of claim 14, wherein the enterprise job management system also communicates over the computer network with an enterprise local site associated with the enterprise control center, the business method further comprising the step of:
collecting a third payment from the enterprise local site associated with the enterprise control center for allowing the enterprise local site to use the enterprise job management system.

16. The business method of claim 15, comprising the step of:
collecting a fourth payment from the first vendor for advertising material the first vendor places on the enterprise job management system.
